(19) Europäisches Patentamt
European Patent Office
Office européen des brevets

(11) EP 4 723 255 A1

(12) **EUROPEAN PATENT APPLICATION**
published in accordance with Art. 153(4) EPC

(43) Date of publication:
**08.04.2026 Bulletin 2026/15**

(21) Application number: **24811187.4**

(22) Date of filing: **23.05.2024**

(51) International Patent Classification (IPC):
***H01M 8/1018*** (2016.01) ***C08B 5/00*** (2006.01)
***D21H 11/18*** (2006.01) ***D21H 15/02*** (2006.01)
***H01M 8/10*** (2016.01) ***H01M 8/1034*** (2016.01)
***H01M 8/1067*** (2016.01) ***H01M 8/1069*** (2016.01)
***H01M 8/1081*** (2016.01) ***H01M 8/1086*** (2016.01)

(52) Cooperative Patent Classification (CPC):
Y02E 60/50; Y02P 70/50

(86) International application number:
**PCT/JP2024/019090**

(87) International publication number:
**WO 2024/242182 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.05.2023 JP 2023085623**
**02.02.2024 JP 2024015008**

(71) Applicants:
- **National University Corporation Yamagata University**
**Yamagata-shi, Yamagata 990-8560 (JP)**
- **Oji Holdings Corporation**
**Chuo-ku**
**Tokyo 104-0061 (JP)**

(72) Inventors:
- **MASUHARA Akito**
**Yonezawa-shi, Yamagata 992-8510 (JP)**
- **SAITO Takaaki**
**Yonezawa-shi, Yamagata 992-8510 (JP)**
- **MATSUO Yoshimasa**
**Yonezawa-shi, Yamagata 992-8510 (JP)**
- **ZHAO Mengchen**
**Tokyo 104-0061 (JP)**
- **FUSHIMI Hayato**
**Tokyo 104-0061 (JP)**

(74) Representative: **Godemeyer Blum Lenze Patentanwälte**
**Partnerschaft mbB - werkpatent**
**An den Gärten 7**
**51491 Overath (DE)**

# (54) ELECTROLYTE MEMBRANE FOR SOLID POLYMER FUEL CELL, MEMBRANE ELECTRODE ASSEMBLY, SOLID POLYMER FUEL CELL, METHOD FOR PRODUCING SAME, AND ELECTROLYTE MEMBRANE FOR SOLID POLYMER WATER ELECTROLYSIS

(57) A purpose of the present invention is to provide: an electrolyte membrane for a polymer electrolyte fuel cell, said electrolyte membrane having excellent proton conductivity; a membrane electrode assembly that includes the electrolyte membrane for the polymer electrolyte fuel cell; a polymer electrolyte fuel cell that includes the membrane electrode assembly; methods for producing the electrolyte membrane for a polymer electrolyte fuel cell, the membrane electrode assembly, and the polymer electrolyte fuel cell; and an electrolyte membrane for solid polymer water electrolysis.

The electrolyte membrane for a polymer electrolyte fuel cell according to the present invention contains fine fibrous cellulose that is derived from wood or plants, wherein the average fiber width of the fine fibrous cellulose that is derived from wood or plants is 50 nm or less, and the fine fibrous cellulose has a phosphorus oxoacid group.

EP 4 723 255 A1

## Description

Technical Field

The present invention relates to an electrolyte membrane for a polymer electrolyte fuel cell, a membrane electrode assembly, a polymer electrolyte fuel cell, methods for producing these, and an electrolyte membrane for solid polymer water electrolysis.

Background Art

A fuel cell can generate energy using hydrogen, and therefore has a small environmental load. Among fuel cells, a polymer electrolyte fuel cell (PEFC) has attracted attention as an energy supply source for a mobile phone, an automobile, and the like because PEFC can be operated at a low temperature and has high power generation efficiency. In addition, research and development of solid polymer water electrolysis, which is a method for producing hydrogen to be supplied to the polymer electrolyte fuel cell, is also in progress.

Conventionally, a perfluorosulfonic acid polymer has been widely used as a constituent material of an electrolyte membrane for the polymer electrolyte fuel cell. However, in recent years, research and development for the purpose of improving battery performance using cellulose which has a smaller environmental load than that of a perfluorosulfonic acid polymer and is naturally abundant as a raw material for forming an electrolyte membrane have been advanced. For example, Patent Literature 1 describes a fuel cell including a nanocellulose membrane as an electrolyte membrane, in which a sulfonic acid group ($SO_3H$) is directly bonded to the nanocellulose membrane in a mode in which OH of a hydroxymethyl group ($CH_2OH$) constituting the nanocellulose membrane is replaced with the sulfonic acid group. In addition, Patent Literature 2 describes a composition for an electrolyte membrane, a polymer electrolyte fuel cell including a solid polymer electrolyte membrane obtained from the composition for an electrolyte membrane, and a water electrolysis apparatus for the purpose of providing a composition which can easily provide a polymer electrolyte membrane which is excellent in durability and can suppress a decrease in power generation performance and water electrolysis performance with time.

Citation List

Patent Literature

Patent Literature 1:JP 6721952 B2
Patent Literature 2: WO 2014/157389 A

Summary of Invention

Technical Problem

The nanocellulose membrane as an electrolyte membrane included in the fuel cell (polymer electrolyte fuel cell) described in Patent Literature 1 does not have sufficient proton conductive performance, and it is desired to enhance the proton conductive performance of the electrolyte membrane from a viewpoint of improving power generation efficiency of the cell and prolonging a life of the cell. In addition, also in the water electrolysis apparatus described in Patent Literature 2, it is desired to enhance proton conductive performance of the solid polymer electrolyte membrane from a viewpoint of improving hydrogen production efficiency.

An object of the present invention is to provide: an electrolyte membrane for a polymer electrolyte fuel cell, the electrolyte membrane having excellent proton conductive performance; a membrane electrode assembly having the electrolyte membrane for the polymer electrolyte fuel cell; a polymer electrolyte fuel cell including the membrane electrode assembly; methods for producing the electrolyte membrane for a polymer electrolyte fuel cell, the membrane electrode assembly, and the polymer electrolyte fuel cell; and an electrolyte membrane for solid polymer water electrolysis.

Solution to Problem

The present inventors have attempted to apply, among various fibrous celluloses derived from fiber raw materials, a fine fibrous cellulose derived from wood or plants to an electrolyte membrane for a polymer electrolyte fuel cell and an electrolyte membrane for solid polymer water electrolysis by utilizing the fact that the fine fibrous cellulose

derived from wood or plants is easily dispersed homogeneously in water after a phosphorus oxoacid group is introduced thereinto. The present inventors have found that an electrolyte membrane having excellent proton conductive performance can be obtained by using a fine fibrous cellulose derived from wood or plants, having a specific average fiber width, and having a phosphorus oxoacid group for the electrolyte membrane, and have completed the present invention.

That is, the present invention relates to the following <1> to <24>.

<1> An electrolyte membrane for a polymer electrolyte fuel cell, the membrane containing a fine fibrous cellulose derived from wood or plants, wherein
an average fiber width of the fine fibrous cellulose derived from wood or plants is 50 nm or less, and the fine fibrous cellulose derived from wood or plants has a phosphorus oxoacid group.
<2> The electrolyte membrane for a polymer electrolyte fuel cell according to <1>, wherein a counter ion of the phosphorus oxoacid group contains $H^+$ and/or $Na^+$.
<3> The electrolyte membrane for a polymer electrolyte fuel cell according to <1> or <2>, wherein a counter ion of the phosphorus oxoacid group contains $H^+$.
<4> The electrolyte membrane for a polymer electrolyte fuel cell according to any one of <1> to <3>, wherein an amount of phosphorus oxoacid groups introduced into the fine fibrous cellulose derived from wood or plants is 0.50 mmol/g or more.
<5> The electrolyte membrane for a polymer electrolyte fuel cell according to any one of <1> to <4>, wherein a content of the fine fibrous cellulose derived from wood or plants is 80% by mass or more in a solid content of the electrolyte membrane for a polymer electrolyte fuel cell.
<6> The electrolyte membrane for a polymer electrolyte fuel cell according to any one of <1> to <4>, wherein a content of the fine fibrous cellulose derived from wood or plants is 30% by mass or more in a solid content of the electrolyte membrane for a polymer electrolyte fuel cell.
<7> A membrane electrode assembly including a positive electrode catalyst layer, the electrolyte membrane for a polymer electrolyte fuel cell according to any one of <1> to <6>, and a negative electrode catalyst layer bonded in this order.
<8> A polymer electrolyte fuel cell including the membrane electrode assembly according to <7>.
<9> A method for producing an electrolyte membrane for a polymer electrolyte fuel cell, the method including the following preparation step and film forming step in this order, wherein
an average fiber width of a fine fibrous cellulose derived from wood or plants in the following preparation step is 50 nm or less, and the fine fibrous cellulose derived from wood or plants has a phosphorus oxoacid group:

Preparation step: a step of preparing a dispersion of the fine fibrous cellulose derived from wood or plants; and
Film forming step: a step of forming a film of a dispersion of the fine fibrous cellulose derived from wood or plants.

<10> The method for producing an electrolyte membrane for a polymer electrolyte fuel cell according to <9>, the method including the following ion exchange step between the preparation step and the film forming step:
Ion exchange step: a step of treating a dispersion of the fine fibrous cellulose derived from wood or plants with a cation exchange resin.
<11> A method for producing a membrane electrode assembly, the method including a step of bonding a positive electrode catalyst layer to one surface of an electrolyte membrane for a polymer electrolyte fuel cell obtained by the method for producing an electrolyte membrane for a polymer electrolyte fuel cell according to <9> or <10>, and bonding a negative electrode catalyst layer to the other surface of the electrolyte membrane for a polymer electrolyte fuel cell.
<12> A method for producing a polymer electrolyte fuel cell, the method including a step of incorporating a membrane electrode assembly obtained by the method for producing a membrane electrode assembly according to <11>.
<13> An electrolyte membrane for solid polymer water electrolysis, the membrane containing a fine fibrous cellulose derived from wood or plants, wherein
an average fiber width of the fine fibrous cellulose derived from wood or plants is 50 nm or less, and the fine fibrous cellulose derived from wood or plants has a phosphorus oxoacid group.
<14> The electrolyte membrane for solid polymer water electrolysis according to <13>, wherein a counter ion of the phosphorus oxoacid group contains $H^+$ and/or $Na^+$.
<15> The electrolyte membrane for solid polymer water electrolysis according to <13> or <14>, wherein a counter ion of the phosphorus oxoacid group contains $H^+$.
<16> The electrolyte membrane for solid polymer water electrolysis according to any one of <13> to <15>, wherein an amount of phosphorus oxoacid groups introduced into the fine fibrous cellulose derived from wood or plants is 0.50 mmol/g or more.
<17> The electrolyte membrane for solid polymer water electrolysis according to any one of <13> to <16>, wherein a

content of the fine fibrous cellulose derived from wood or plants is 80% by mass or more in a solid content of the electrolyte membrane for solid polymer water electrolysis.

<18> The electrolyte membrane for solid polymer water electrolysis according to any one of <13> to <16>, wherein a content of fine fibrous cellulose derived from wood or plants is 30% by mass or more in a solid content of the electrolyte membrane for solid polymer water electrolysis.

<19> A membrane electrode assembly including a positive electrode catalyst layer, the electrolyte membrane for solid polymer water electrolysis according to any one of <13> to <18>, and a negative electrode catalyst layer bonded in this order.

<20> A solid polymer water electrolysis apparatus including the membrane electrode assembly according to <19>.

<21> A method for producing an electrolyte membrane for solid polymer water electrolysis, the method including the following preparation step and film forming step in this order, wherein

an average fiber width of a fine fibrous cellulose derived from wood or plants in the following preparation step is 50 nm or less, and the fine fibrous cellulose derived from wood or plants has a phosphorus oxoacid group.
Preparation step: a step of preparing a dispersion of the fine fibrous cellulose derived from wood or plants; and
Film forming step: a step of forming a film of a dispersion of the fine fibrous cellulose derived from wood or plants.

<22> The method for producing an electrolyte membrane for solid polymer water electrolysis according to <21>, the method including the following ion exchange step between the preparation step and the film forming step:
Ion exchange step: a step of treating a dispersion of the fine fibrous cellulose derived from wood or plants with a cation exchange resin.

<23> A method for producing a membrane electrode assembly, the method including a step of bonding a positive electrode catalyst layer to one surface of an electrolyte membrane for solid polymer water electrolysis obtained by the method for producing an electrolyte membrane for solid polymer water electrolysis according to <21> or <22>, and bonding a negative electrode catalyst layer to the other surface of the electrolyte membrane for solid polymer water electrolysis.

<24> A method for producing a solid polymer water electrolysis apparatus, the method including a step of incorporating a membrane electrode assembly obtained by the method for producing a membrane electrode assembly according to <23>.

## Advantageous Effects of Invention

According to the present invention, it is possible to provide: an electrolyte membrane for a polymer electrolyte fuel cell, the electrolyte membrane having excellent proton conductive performance; a membrane electrode assembly having the electrolyte membrane for a polymer electrolyte fuel cell; a polymer electrolyte fuel cell including the membrane electrode assembly; methods for producing the electrolyte membrane for a polymer electrolyte fuel cell, the membrane electrode assembly, and the polymer electrolyte fuel cell; and an electrolyte membrane for solid polymer water electrolysis.

## Brief Description of Drawings

Fig. 1 is a graph illustrating a relationship between the amount of NaOH added dropwise to a dispersion of fine fibrous cellulose having a phosphorus oxoacid group and pH.

## Description of Embodiments

Hereinafter, a preferable embodiment of the present invention will be described. Note that, in the present specification, "X to Y" indicating a range means "X or more and Y or less". In the present specification, an upper limit and a lower limit of a numerical range can be arbitrarily combined.

### [Electrolyte membrane for polymer electrolyte fuel cell]

An electrolyte membrane for a polymer electrolyte fuel cell of the present embodiment contains a fine fibrous cellulose derived from wood or plants, an average fiber diameter width of the fine fibrous cellulose derived from wood or plants is 50 nm or less, and the fine fibrous cellulose has a phosphorus oxoacid group.

As a component contained or a component that can be contained in the electrolyte membrane for a polymer electrolyte fuel cell of the present embodiment, one component may be used singly, or two or more components may be used in combination.

The electrolyte membrane for a polymer electrolyte fuel cell of the present embodiment and an electrolyte

membrane for solid polymer water electrolysis of the present embodiment described later have the same configuration except for applications. Hereinafter, the "electrolyte membrane" means an electrolyte membrane for a polymer electrolyte fuel cell or solid polymer water electrolysis. In addition, the "fine fibrous cellulose derived from wood or plants" may be simply referred to as "fine fibrous cellulose".

A reason why the electrolyte membrane for a polymer electrolyte fuel cell of the present embodiment is excellent in proton conductive performance is not clear. However, it is considered that the proton conductive performance in the membrane is enhanced by the fact that the fine fibrous cellulose derived from wood or plants is relatively hydrophilic even after a phosphorus oxoacid group is introduced thereinto, the fact that the fine fibrous cellulose derived from wood or plants having a phosphorus oxoacid group can be easily dispersed homogeneously in water to form a smooth electrolyte membrane for a polymer electrolyte fuel cell, and the fact that many of the phosphorus oxoacid groups are present in the electrolyte membrane for a polymer electrolyte fuel cell in a state of divalent anionic groups without being dehydrated and condensed in fine fibrous cellulose molecules.

Hereinafter, the electrolyte membrane for a polymer electrolyte fuel cell of the present embodiment will be described in detail.

<Fine fibrous cellulose derived from wood or plants>

A fiber width of the fine fibrous cellulose is preferably 2 nm or more and 50 nm or less, more preferably 40 nm or less, still more preferably 30 nm or less, further still more preferably 20 nm or less, and particularly preferably 10 nm or less. By setting the fiber width of the fine fibrous cellulose to 2 nm or more, it is possible to suppress dissolution of the fine fibrous cellulose in water as cellulose molecules and to more easily exhibit an effect of improving strength, rigidity, and dimensional stability by the fine fibrous cellulose.

Note that the fiber width of the fine fibrous cellulose can be measured, for example, by electron microscopic observation.

An average fiber width of the fine fibrous cellulose is 50 nm or less. The average fiber width of the fine fibrous cellulose is preferably 2 nm or more and 50 nm or less, more preferably 40 nm or less, still more preferably 30 nm or less, further still more preferably 20 nm or less, and particularly preferably 10 nm or less. By setting the average fiber width of the fine fibrous cellulose to 2 nm or more, it is possible to suppress dissolution of the fine fibrous cellulose in water as cellulose molecules and to more easily exhibit an effect of improving strength, rigidity, and dimensional stability by the fine fibrous cellulose. By setting the average fiber width of the fine fibrous cellulose to 50 nm or less, it is possible to smooth a surface of the electrolyte membrane for a polymer electrolyte fuel cell of the present embodiment. By the smooth surface of the electrolyte membrane for a polymer electrolyte fuel cell, protons easily move among a positive electrode catalyst layer, the electrolyte membrane for a polymer electrolyte fuel cell, and a negative electrode catalyst layer, and proton conductive performance can be improved.

Note that the fine fibrous cellulose is, for example, a monofilamentous cellulose.

The average fiber width of the fine fibrous cellulose is measured as follows using, for example, an electron microscope. First, an aqueous suspension of a fine fibrous cellulose having a concentration of 0.05% by mass or more and 0.1% by mass or less is prepared, and the suspension is cast onto a carbon membrane-coated grid subjected to a hydrophilization treatment to obtain a sample for transmission electron microscope (TEM) observation. When the fine fibrous cellulose includes a wide fiber, a scanning electron microscope (SEM) image on a surface of glass onto which the suspension has been cast may be observed. Next, observation with an electron microscope image is performed at a magnification of 1,000 times, 5,000 times, 10,000 times, or 50,000 times depending on the width of a fiber to be observed. Note that a sample, observation conditions, and magnification are adjusted so as to satisfy the following conditions.

(1) One straight line X is drawn at an arbitrary position in an observation image, and 20 or more fibers intersect the straight line X.
(2) A straight line Y perpendicularly intersecting the straight line is drawn in the same image, and 20 or more fibers intersect the straight line Y.

For an observation image satisfying the above conditions, the width of a fiber intersecting the straight line X and the straight line Y is visually read. In this way, at least three or more sets of observation images of a surface portions not overlapping each other are obtained. Next, for each image, the width of a fiber intersecting the straight line X and the straight line Y is read. As a result, the fiber widths of at least 20 fibers $\times 2 \times 3$ = 120 fibers are read. Then, an average value of the read fiber widths is defined as an average fiber width of the fine fibrous cellulose.

The fiber length of the fine fibrous cellulose is, for example, preferably 0.1 μm or more and 1,000 μm or less, more preferably 0.1 μm or more and 800 μm or less, and still more preferably 0.1 um or more and 600 μm or less. By setting the fiber length within the above range, destruction of a crystal region of the fine fibrous cellulose can be suppressed. It is also possible to set a viscosity of a slurry (dispersion) of the fine fibrous cellulose within an appropriate range. Note that the fiber

length of the fine fibrous cellulose can be determined by image analysis, for example, using TEM, SEM, or atomic force microscopy (AFM).

The fine fibrous cellulose preferably has a type I crystal structure. Here, it can be identified that the fine fibrous cellulose has the type I crystal structure in a diffraction profile which is obtained from a wide-angle X-ray diffraction photograph using CuK$\alpha$ ($\lambda$ = 1.5418 Å) monochromatized with graphite. Specifically, it can be identified by having typical peaks at two positions in the vicinity of $2\theta$ = 14° or more and 17° or less and in the vicinity of $2\theta$ = 22° or more and 23° or less.

A ratio of the type I crystal structure in the fine fibrous cellulose is, for example, preferably 30% or more, more preferably 40% or more, and still more preferably 50% or more. A crystallinity can be determined by a conventional method from a pattern of an X-ray diffraction profile which has been measured (Seagal et al., Textile Research Journal, vol. 29, p. 786, 1959).

An axial ratio (fiber length/fiber width) of the fine fibrous cellulose is not particularly limited, but is, for example, preferably 20 or more and 10,000 or less, and more preferably 50 or more and 1,000 or less. By setting the axial ratio to the above lower limit value or more, it is easy to form an electrolyte membrane for a polymer electrolyte fuel cell. In addition, sufficient thickening is likely to be obtained when a solvent dispersion is prepared. By setting the axial ratio to the above upper limit value or less, for example, when the fine fibrous cellulose is treated as a water dispersion, handling such as dilution is easily performed, which is preferable.

The fine fibrous cellulose in the present embodiment has a phosphorus oxoacid group. Note that, in the present specification, the "phosphorus oxoacid group" includes a substituent derived from the phosphorus oxoacid group. In addition, a "counter ion" of the phosphorus oxoacid group includes a dissociable proton.

Examples of the counter ion include $\beta^{b+}$ (a proton ($H^+$) or a monovalent or higher valent cation formed of an organic substance or an inorganic substance) of a substituent represented by the formula (1) described later. In particular, the counter ion preferably contains at least one selected from the group consisting of $H^+$ and alkali metal (sodium, potassium, lithium, or the like) ions, more preferably contains $H^+$ and/or a sodium ion ($Na^+$) from a viewpoint of improving proton conductive performance of the electrolyte membrane for a polymer electrolyte fuel cell, and the counter ion more preferably contains $H^+$ from a viewpoint of improving proton conductive performance of the electrolyte membrane for a polymer electrolyte fuel cell, reducing temperature dependence of a proton conductivity, and reducing activation energy of proton conduction.

In addition, the content (mass) of cations other than $H^+$ contained in the counter ion is preferably 100,000 ppm or less, more preferably 1000 ppm or less, and still more preferably 100 ppm or less, and is 0 ppm or more, and preferably 0 ppm from a viewpoint of improving proton conductive performance of the electrolyte membrane for a polymer electrolyte fuel cell, reducing temperature dependence of a proton conductivity, and reducing activation energy of proton conduction.

The phosphorus oxoacid group is, for example, a substituent represented by the following formula (1). A plurality of types of substituents represented by the following formula (1) may be introduced into molecules of the fine fibrous cellulose. In this case, a plurality of substituents represented by the following formula (1) to be introduced may be the same or different. The substituent represented by the following formula (1) is preferably directly bonded to a carbon atom at a 2-, 3-, and/or 6-position of the cellulose by "-O-".

[Chemical Formula 1]

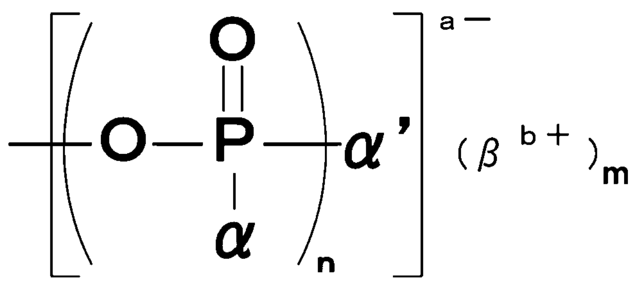

(1)

In the formula (1), a, b, and n are natural numbers, and m is any number (provided that a = b $\times$ m). At least one of n $\alpha$s and n $\alpha'$ is $O^-$, and the remaining $\alpha$s and $\alpha'$ are R or OR. Note that all $\alpha$s and $\alpha'$ may be $O^-$. All n $\alpha$s may be the same or different. $\beta^{b+}$ is a monovalent or higher valent cation formed of an organic substance or an inorganic substance.

Rs are each a hydrogen atom, a saturated-linear chain hydrocarbon group, a saturated-branched chain hydrocarbon group, a saturated-cyclic hydrocarbon group, an unsaturated-linear chain hydrocarbon group, an unsaturated-branched chain hydrocarbon group, an unsaturated-cyclic hydrocarbon group, an aromatic group, or a derivative group thereof. In the formula (1), n is preferably 1.

Examples of the saturated-linear chain hydrocarbon group include a methyl group, an ethyl group, a n-propyl

group, and a n-butyl group, but are not particularly limited thereto. Examples of the saturated-branched chain hydrocarbon group include an i-propyl group and a t-butyl group, but are not particularly limited thereto. Examples of the saturated-cyclic hydrocarbon group include a cyclopentyl group and a cyclohexyl group, but are not particularly limited thereto. Examples of the unsaturated linear chain hydrocarbon group include a vinyl group and an allyl group, but are not particularly limited thereto. Examples of the unsaturated-branched chain hydrocarbon group include an i-propenyl group and a 3-butenyl group, but are not particularly limited thereto. Examples of the unsaturated cyclic hydrocarbon group include a cyclopentenyl group and a cyclohexenyl group, but are not particularly limited thereto. Examples of the aromatic group include a phenyl group and a naphthyl group, but are not particularly limited thereto.

Examples of the derivative group in R include a functional group in a state in which at least one selected from functional groups such as a carboxy group, a carboxylate group (-COO-), a hydroxy group, an amino group, and an ammonium group is added to or substituted with a main chain or a side chain of each of the above various hydrocarbon groups, but are not particularly limited thereto. The number of carbon atoms constituting the main chain of R is not particularly limited, but is preferably 20 or less, and more preferably 10 or less. By setting the number of carbon atoms constituting the main chain of R within the above range, a molecular weight of the phosphorus oxoacid group can be set within an appropriate range, permeation into a fiber raw material can be facilitated, and a yield of the fine fibrous cellulose can be increased. Note that, when a plurality of Rs are present in the formula (1) or when a plurality of types of substituents represented by the formula (1) are introduced into the fine fibrous cellulose, the plurality of Rs may be the same or different.

$\beta^{b+}$ is $H^+$ or a monovalent or higher valent cation formed of an organic substance or an inorganic substance. Examples of the monovalent or higher valent cation formed of an organic substance include an organic onium ion. Examples of the organic onium ion include an organic ammonium ion and an organic phosphonium ion. Examples of the organic ammonium ion include an aliphatic ammonium ion and an aromatic ammonium ion, and examples of the organic phosphonium ion include an aliphatic phosphonium ion and an aromatic phosphonium ion. Examples of the monovalent or higher valent cation formed of an inorganic substance include an ion of an alkali metal such as sodium, potassium, or lithium, an ion of a divalent metal such as calcium or magnesium, a hydrogen ion, and an ammonium ion. Note that, when a plurality of $\beta^{b+}$s are present in the formula (1) or when a plurality of types of substituents represented by the formula (1) are introduced into the fine fibrous cellulose, the plurality of $\beta^{b+}$s may be the same or different. $\beta^{b+}$ preferably contains at least one selected from the group consisting of $H^+$ and alkali metal ions, more preferably contains $H^+$ and/or a sodium ion ($Na^+$) from a viewpoint of improving proton conductive performance of the electrolyte membrane for a polymer electrolyte fuel cell, and $\beta^{b+}$ still more preferably contains $H^+$ from a viewpoint of improving proton conductive performance of the electrolyte membrane for a polymer electrolyte fuel cell, reducing temperature dependence of a proton conductivity, and reducing activation energy of proton conduction.

More specific examples of the phosphorus oxoacid group include a phosphoric acid group ($-OPO_3H_2$), a salt of a phosphoric acid group, a phosphorous acid group (phosphonic acid group) ($-OPO_2H_2$), and a salt of a phosphorous acid group (phosphonic acid group). In addition, examples of the phosphorus oxoacid group include a group in which a phosphoric acid group is condensed (for example, a pyrophosphorus oxoacid group), a group in which a phosphonic acid is condensed (for example, a polyphosphonic acid group), a phosphate group (for example, a monomethyl phosphate group or a polyoxyethylene alkyl phosphate group), and an alkyl phosphonate group (for example, a methyl phosphonate group).

The amount of phosphorus oxoacid groups introduced into the fine fibrous cellulose is, for example, preferably 0.50 mmol/g or more and 2.50 mmol/g or less, more preferably 0.80 mmol/g or more, still more preferably 1.00 mmol/g or more, particularly preferably 1.20 mmol/g or more, and more preferably 2.30 mmol/g or less, and still more preferably 2.10 mmol/g or less per g (mass) of the fine fibrous cellulose.

The amount of phosphorus oxoacid groups introduced is preferably the above lower limit value or more from a viewpoint of improving proton conductive performance of the electrolyte membrane for a polymer electrolyte fuel cell, and the amount of phosphorus oxoacid groups introduced is preferably the above upper limit value or less from a viewpoint of improving strength, rigidity, and dimensional stability of the electrolyte membrane for a polymer electrolyte fuel cell.

Here, the denominator in the unit mmol/g indicates the mass of the fine fibrous cellulose when the counter ion of the phosphorus oxoacid group is a hydrogen ion ($H^+$).

The amount of phosphorus oxoacid groups introduced into the fine fibrous cellulose can be measured by, for example, a neutralization titration method. In measurement by a neutralization titration method, a change in pH is determined while an alkali such as a sodium hydroxide aqueous solution is added to an obtained slurry containing the fine fibrous cellulose, whereby the amount of introduction is measured.

Fig. 1 is a graph illustrating a relationship between the amount of NaOH added dropwise to a fine fibrous cellulose having a phosphorus oxoacid group and pH.

Fig. 1 is a graph illustrating a relationship between the amount of NaOH added dropwise to a slurry containing a fine fibrous cellulose having a phosphorus oxoacid group and pH. The amount of phosphorus oxoacid groups introduced into the fine fibrous cellulose can be measured, for example, as follows.

First, a slurry containing a fine fibrous cellulose is treated with a strongly acidic ion exchange resin. Note that,

before the treatment with the strongly acidic ion exchange resin, a similar defibration treatment to a defibration treatment step described later may be performed on the measurement target as necessary.

Next, a change in pH is observed while a sodium hydroxide aqueous solution is added, and a titration curve as indicated in an upper part of Fig. 1 is obtained. In the titration curve indicated in the upper part of Fig. 1, a measured pH is plotted with respect to the amount of the alkali added, and in the titration curve indicated in a lower part of Fig. 1, an increment (differential value) (1/mmol) of a pH with respect to the amount of the alkali added is plotted. In this neutralization titration, two points at which the increment (differential value of a pH with respect to the amount of the alkali added dropwise) is maximum are confirmed in the curve obtained by plotting a measured pH with respect to the amount of the alkali added. Out of these points, a maximum point of the increment obtained first after addition of the alkali is referred to as a first end point, and a maximum point of the increment obtained next is referred to as a second end point. The alkali amount required from start of titration to the first end point is equal to a first dissociated acid amount of the fine fibrous cellulose contained in the slurry used for titration, the alkali amount required from the first end point to the second end point is equal to a second dissociated acid amount of the fine fibrous cellulose contained in the slurry used for titration, and the alkali amount required from the start of titration to the second end point is equal to a total dissociated acid amount of the fine fibrous cellulose contained in the slurry used for titration. A value obtained by dividing the alkali amount required from the start of titration to the first end point by the solid content (g) in the slurry to be titrated is the amount of phosphorus oxoacid groups introduced (mmol/g). Note that the simple term "the amount of phosphorus oxoacid groups introduced (or the amount of phosphorus oxoacid groups)" refers to the first dissociated acid amount.

Note that, in Fig. 1, a region ranging from the start of titration to the first end point is referred to as a first region, and a region ranging from the first end point to the second end point is referred to as a second region. For example, when the phosphorus oxoacid group is a phosphoric acid group and the phosphorus oxoacid group causes condensation, the amount of weakly acidic groups in the phosphorus oxoacid group (also referred to as the "second dissociated acid amount" in the present description) is apparently reduced, and the alkali amount required for the second region is decreased as compared with the alkali amount required for the first region. Meanwhile, the amount of strongly acidic groups in the phosphorus oxoacid group (also referred to as the "first dissociated acid amount" in the present description) coincides with the amount of phosphorous atoms regardless of presence or absence of condensation. When the phosphorus oxoacid group is a phosphorous acid group, since a weakly acidic group is not present in the phosphorus oxoacid group, the alkali amount required for the second region may be decreased, or the alkali amount required for the second region may be zero. In this case, in the titration curve, there is only one point at which the increment of a pH is maximum.

Note that the denominator of the above-described amount of phosphorus oxoacid groups introduced (mmol/g) indicates the mass of an acid type fine fibrous cellulose. Therefore, the amount of phosphorus oxoacid groups introduced (mmol/g) indicates the amount of phosphorus oxoacid groups of the acid type fine fibrous cellulose (hereinafter, referred to as "amount of phosphorus oxoacid groups (acid type)"). On the other hand, when the counter ion of the phosphorus oxoacid group is replaced with any cation C so as to achieve charge equivalent, the denominator is converted into the mass of a fine fibrous cellulose in which the cation C is the counter ion, whereby the amount of phosphorus oxoacid groups of the fine fibrous cellulose in which the cation C is the counter ion (hereinafter, referred to as "amount of phosphorus oxoacid groups (C type)") can be determined.

That is, the amount of phosphorus oxoacid groups (C type) is calculated by the following calculation formula.

Amount of phosphorus oxoacid groups (C type) = amount of phosphorus oxoacid groups (acid type)/$\{1+ (W - 1) \times A/1000\}$

A [mmol/g]: Total amount of anions derived from phosphorus oxoacid groups of fine fibrous cellulose (value obtained by adding the amount of strongly acidic groups and the amount of weakly acidic groups of phosphorus oxoacid groups)
W: Formula amount per valence of cation C (for example, Na is 23, and Al is 9.)

Note that, in the measurement of phosphorus oxoacid groups by the titration method, when the amount of a single droplet of a sodium hydroxide aqueous solution added dropwise is too large, or when a titration interval is too short, the amount of phosphorus oxoacid groups may be measured to be lower than an actual value, and thus, a precise value cannot be obtained in some cases. As an appropriate amount added dropwise and an appropriate titration interval, for example, titration is desirably performed by dropwise adding 10 to 50 μL of a 0.1 N sodium hydroxide aqueous solution every 5 to 30 seconds. In addition, in order to eliminate an influence of carbon dioxide dissolved in the fine fibrous cellulose-containing slurry, for example, it is desirable to perform measurement while blowing an inert gas such as nitrogen gas into the slurry from 15 minutes before the start of titration to the end of titration.

The measurement of the amount of phosphorus oxoacid groups by the above-described method is applied to a fine fibrous cellulose having a fiber width of 50 nm or less, and when the amount of phosphorus oxoacid groups in a pulp

fiber having a fiber width exceeding 50 nm is measured, the measurement is performed after the pulp fiber is refined.

In the present embodiment, the fine fibrous cellulose may be obtained by removing some phosphorus oxoacid groups from the above-described fine fibrous cellulose into which phosphorus oxoacid groups have been introduced to be defibrated.

[Method for producing fine fibrous cellulose]

(Wood-based or plants-based fiber raw material containing cellulose)

The fine fibrous cellulose derived from wood or plants is produced from a wood-based or plants-based fiber raw material containing a cellulose (hereinafter, the wood-based or plants-based fiber raw material is also simply referred to as "fiber raw material") containing a cellulose. The fine fibrous cellulose derived from wood or plants is preferable from a viewpoint that a phosphorus oxoacid group is easily introduced thereinto, and the amount of phosphorus oxoacid groups introduced is increased to improve proton conductive performance of the electrolyte membrane for a polymer electrolyte fuel cell.

Examples of the wood-based fiber raw material containing a cellulose include a wood pulp. Examples of the wood pulp include: chemical pulps such as a leaf bleached kraft pulp (LBKP), a needle bleached kraft pulp (NBKP), a sulfite pulp (SP), a dissolving pulp (DP), a soda pulp (AP), an unbleached kraft pulp (UKP), and an oxygen bleached kraft pulp (OKP); semichemical pulps such as a semi-chemical pulp (SCP) and a chemi-ground wood pulp (CGP); and mechanical pulps such as a ground pulp (GP) and a thermomechanical pulp (TMP, BCTMP).

Examples of the plants-based fiber raw material containing a cellulose include cotton-based pulps such as a cotton linter and a cotton lint, hemp, wheat straw, bamboo, and bagasse.

Among the above pulps, for example, the wood-based pulp is preferable from a viewpoint of easy availability. Among the wood pulps, for example, a chemical pulp is more preferable, a kraft pulp is still more preferable, and LBKP and NBKP are particularly preferable from a viewpoint that a cellulose ratio is large, and a yield of a fine fibrous cellulose at the time of defibration treatment is high, and from a viewpoint that a fine fibrous cellulose having small decomposition of a cellulose in pulp, a large axial ratio, and long fibers is obtained.

As the pulp of the present embodiment, one of the above pulps may be used singly, or two or more thereof may be used in combination.

In order to obtain the above-described fine fibrous cellulose having a phosphorus oxoacid group introduced thereinto, a phosphorus oxoacid group introduction step of introducing a phosphorus oxoacid group into the above-described cellulose-containing fiber raw material, a washing step, an alkali treatment step (neutralization step), and a defibration treatment step are preferably included in this order, and an acid treatment step may be included instead of or in addition to the washing step.

(phosphorus oxoacid group introduction step)

The phosphorus oxoacid group introduction step is a step of allowing at least one compound (hereinafter, also referred to as "compound A") selected from compounds capable of introducing a phosphorus oxoacid group to act on a cellulose-containing fiber raw material by a reaction between the compound A and a hydroxy group of the cellulose-containing fiber raw material. By this step, a phosphorus oxoacid group-introduced fiber is obtained.

In the phosphorus oxoacid group introduction step according to the present embodiment, the reaction between the cellulose-containing fiber raw material and the compound A may be performed in the presence of at least one selected from urea and derivatives thereof (hereinafter, also referred to as "compound B"). On the other hand, the reaction between the cellulose-containing fiber raw material and the compound A may be performed in the absence of the compound B.

An example of a method for allowing the compound A to act on the fiber raw material in the coexistence with the compound B is a method for mixing the compound A and the compound B with the fiber raw material in a dry state, a wet state, or a slurry state. Among these, it is preferable to use the fiber raw material in a dry state or a wet state, and it is particularly preferable to use the fiber raw material in a dry state because uniformity of the reaction is high. The form of the fiber raw material is not particularly limited, but is preferably, for example, a cotton-like form or a thin sheet-like form. Examples of the method include a method for adding the compound A and the compound B to the fiber raw material while each of the compound A and the compound B is in a powder form, is in a solution form in which the compound A and the compound B are dissolved in a solvent, or is in a melted state by being heated to a melting point or higher. Among these, it is preferable to add the compound A and the compound B in a solution form in which the compound A and the compound B are dissolved in a solvent, particularly in an aqueous solution state because uniformity of the reaction is high. In addition, the compound A and the compound B may be simultaneously added to the fiber raw material, may be separately added, or may be added as a mixture. A method for adding the compound A and the compound B is not particularly limited, but when each of the compound A and the compound B is in a form of a solution, the fiber raw material may be immersed in the

solution to absorb liquid, and then taken out, or the solution may be added dropwise to the fiber raw material. In addition, required amounts of the compound A and the compound B may be added to the fiber raw material, or excess amounts of the compound A and the compound B may be added to the fiber raw material, and then surplus amounts of the compound A and the compound B may be removed by compression or filtration.

The compound A used in the present embodiment only needs to be a compound having a phosphorus atom and capable of forming an ester bond with a cellulose, and examples thereof include phosphoric acid or a salt thereof, phosphorous acid or a salt thereof, dehydration-condensed phosphoric acid or a salt thereof, and phosphoric anhydride (diphosphorus pentoxide), but are not particularly limited thereto. As the phosphoric acid, phosphoric acids having various purities can be used, and for example, 100% phosphoric acid (orthophosphoric acid) or 85% phosphoric acid can be used. Examples of the phosphorous acid include 99% phosphorous acid (phosphonic acid). The dehydration-condensed phosphoric acid is obtained by condensing two or more molecules of phosphoric acid by a dehydration reaction, and examples thereof include pyrophosphoric acid and polyphosphoric acid. Examples of the phosphate, phosphite, and dehydration-condensed phosphate include a lithium salt, a sodium salt, a potassium salt, and an ammonium salt of phosphoric acid, phosphorous acid, or dehydration-condensed phosphoric acid, and these can have various degrees of neutralization.

Among these, phosphoric acid or a salt thereof and phosphorous acid or a salt thereof are preferable from a viewpoint of improving proton conductive performance of the electrolyte membrane for a polymer electrolyte fuel cell, and phosphorous acid, phosphoric acid, a sodium salt of phosphoric acid, a potassium salt of phosphoric acid, or an ammonium salt of phosphoric acid is more preferable, and phosphorous acid, phosphoric acid, sodium dihydrogen phosphate, or ammonium dihydrogen phosphate is still more preferable from a viewpoint of high efficiency of introduction of a phosphoric acid group, easiness of further improving defibration efficiency in a defibration step described later, low cost, and easy industrial application.

The amount of the compound A added to the fiber raw material is not particularly limited, but for example, when the amount of the compound A added is converted into the amount of phosphorous atoms, the amount of phosphorous atoms added to 100 parts by mass (absolute dry mass) of the fiber raw material is preferably 0.5 parts by mass or more and 100 parts by mass or less, more preferably 1 part by mass or more and 50 parts by mass or less, and still more preferably 2 parts by mass or more and 30 parts by mass or less. By setting the amount of phosphorous atoms added to the fiber raw material within the above range, a yield of the fine fibrous cellulose can be further improved. On the other hand, by setting the amount of phosphorous atoms added to the fiber raw material to the above upper limit value or less, an effect of improving the yield and cost can be balanced.

The compound B used in the present embodiment is at least one selected from urea and derivatives thereof as described above. Examples of the compound B include urea, biuret, 1-phenylurea, 1-benzylurea, 1-methylurea, and 1-ethylurea.

The compound B is preferably used as an aqueous solution from a viewpoint of improving uniformity of the reaction. In addition, it is preferable to use an aqueous solution in which both the compound A and the compound B are dissolved from a viewpoint of further improving the uniformity of the reaction.

The amount of the compound B added to 100 parts by mass (absolute dry mass) of the fiber raw material is not particularly limited, but for example, is preferably 1 part by mass or more and 500 parts by mass or less, more preferably 10 parts by mass or more and 400 parts by mass or less, and still more preferably 100 parts by mass or more and 350 parts by mass or less.

In the reaction between the cellulose-containing fiber raw material and the compound A, for example, amides or amines may be included in the reaction system in addition to the compound B. Examples of the amides include formamide, dimethylformamide, acetamide, and dimethylacetamide. Examples of the amines include methylamine, ethylamine, trimethylamine, triethylamine, monoethanolamine, diethanolamine, triethanolamine, pyridine, ethylenediamine, and hexamethylenediamine. Among these, particularly triethylamine is known to act as a favorable reaction catalyst.

In the phosphorus oxoacid group introduction step, it is preferable to add or mix the compound A and the like to the fiber raw material, and then to subject the fiber raw material to a heat treatment. As a heat treatment temperature, it is preferable to select a temperature at which a phosphorus oxoacid group can be efficiently introduced while suppressing thermal decomposition and a hydrolysis reaction of a fiber. The heat treatment temperature is, for example, preferably 50°C or higher and 300°C or lower, more preferably 100°C or higher and 250°C or lower, and still more preferably 130°C or higher and 200°C or lower. In the heat treatment, various devices having heat media can be used, and for example, a stirring and drying device, a rotary drying device, a disk drying device, a roll type heating device, a plate type heating device, a fluidized bed drying device, a band type drying device, a filtration drying device, a vibration fluidizing drying device, an airflow drying device, a reduced pressure drying device, an infrared heating device, a far infrared heating device, a microwave heating device, or a high frequency drying device can be used.

In the heat treatment according to the present embodiment, for example, a method for adding the compound A to a thin sheet-shaped fiber raw material by a method such as impregnation and then heating the mixture or a method for heating the fiber raw material and the compound A while kneading or stirring the fiber raw material and the compound A

with a kneader or the like can be adopted. This makes it possible to suppress concentration unevenness of the compound A in the fiber raw material and to more uniformly introduce a phosphoric acid group to a surface of a cellulose fiber contained in the fiber raw material. This is considered to be because it is possible to suppress attraction of the dissolved compound A to water molecules by surface tension and movement of the compound A to the surface of the fiber raw material in a similar manner (that is, occurrence of concentration unevenness of the compound A) when the water molecules move to the surface of the fiber raw material along with drying.

In addition, the heating device used for the heat treatment is preferably a device capable of constantly discharging moisture retained by a slurry and moisture generated in association with a dehydration condensation (phosphoric acid esterification) reaction between the compound A and a hydroxy group or the like contained in a cellulose or the like in the fiber raw material to the outside of the device system. Examples of such a heating device include an air blowing type oven. By constantly discharging moisture in the device system, it is possible to suppress a hydrolysis reaction of a phosphate bond, which is a reverse reaction of phosphoric acid esterification, and it is also possible to suppress acid hydrolysis of a sugar chain in the fiber. Therefore, it is possible to obtain a fine fibrous cellulose having a high axial ratio.

Time for the heat treatment is, for example, preferably 1 second or more and 300 minutes or less, more preferably 1 second or more and 1,000 seconds or less, and still more preferably 10 seconds or more and 800 seconds or less after moisture is substantially removed from the fiber raw material. In the present embodiment, by setting the heating temperature and the heating time within appropriate ranges, the amount of phosphorus oxoacid groups introduced can be set within a preferable range.

The phosphorus oxoacid group introduction step only needs to be performed at least once, but can be repeatedly performed twice or more. By performing the phosphorus oxoacid group introduction step twice or more, a large number of phosphorus oxoacid groups can be introduced into the fiber raw material. In the present embodiment, as an example of a preferable mode, there is a case where the phosphorus oxoacid group introduction step is performed twice.

When a phosphorus oxoacid group is introduced into the fiber raw material, an alkaline solution may be allowed to act on a cellulose contained in the fiber raw material to convert the cellulose into an alkali cellulose. By this treatment, some of hydroxy groups of the cellulose are ionically dissociated, and nucleophilicity (reactivity) can be enhanced. An alkali compound contained in the alkaline solution is not particularly limited, and may be an inorganic alkali compound or an organic alkali compound. For example, sodium hydroxide, potassium hydroxide, tetraethylammonium hydroxide, or tetrabutylammonium hydroxide is preferably used because of high versatility. The conversion into an alkali cellulose may be performed simultaneously with introduction of a phosphorus oxoacid group, may be performed as a preceding stage thereof, or may be performed at both timings.

A solution temperature at the time of starting the conversion into an alkali cellulose is preferably 0°C or higher and 50°C or lower, more preferably 5°C or higher and 40°C or lower, and still more preferably 10°C or higher and 30°C or lower.

An alkaline solution concentration is preferably 0.01 mol/L or more and 4 mol/L or less, more preferably 0.1 mol/L or more and 3 mol/L or less, and still more preferably 1 mol/L or more and 2.5 mol/L or less in terms of a molar concentration. In particular, when the treatment temperature is lower than 10°C, the alkaline solution concentration is preferably 1 mol/L or more and 2 mol/L or less.

A treatment time for the conversion into an alkali cellulose is preferably one minute or more and six hours or less, more preferably ten minutes or more, and still more preferably 30 minutes or more, and is more preferably five hours or less, and still more preferably four hours or less.

By adjusting the type, treatment temperature, concentration, and immersion time of the alkaline solution as described above, it is possible to suppress permeation of the alkaline solution into a crystal region of a cellulose, to easily maintain a cellulose type I crystal structure, and to increase a yield of the fine fibrous cellulose.

When the introduction of a phosphorus oxoacid group and the conversion into an alkali cellulose are not simultaneously performed, the alkali cellulose obtained by the alkali treatment is preferably subjected to solid-liquid separation by a general liquid removing method such as centrifugation or filtration to remove moisture. This improves reaction efficiency in the phosphorus oxoacid group introduction step to be performed next. A cellulose fiber concentration after solid-liquid separation is preferably 5% or more and 50% or less, more preferably 10% or more and 40% or less, and still more preferably 15% or more and 35% or less.

(Washing step)

In the method for producing a fine fibrous cellulose in the present embodiment, a phosphorus oxoacid group-introduced fiber can be subjected to a washing step as necessary. The washing step is performed by washing the phosphorus oxoacid group-introduced fiber with, for example, water or an organic solvent. The washing step may be performed after steps described later, and the number of times of washing performed in each washing step is not particularly limited.

(Alkali treatment step)

When the fine fibrous cellulose is produced, the fiber raw material may be subjected to an alkali treatment between the phosphorus oxoacid group introduction step and a defibration treatment step described later. A method for the alkali treatment is not particularly limited, but examples thereof include a method for immersing a phosphorus oxoacid group-introduced fiber in an alkaline solution.

An alkali compound contained in the alkaline solution is not particularly limited, and may be an inorganic alkali compound or an organic alkali compound. In the present embodiment, for example, sodium hydroxide or potassium hydroxide is preferably used as the alkali compound because of high versatility. A solvent contained in the alkaline solution may be either water or an organic solvent. Among these, the solvent contained in the alkaline solution is preferably water, a polar solvent containing a polar organic solvent exemplified by an alcohol, or the like, and more preferably an aqueous solvent containing at least water. The alkaline solution is preferably, for example, a sodium hydroxide aqueous solution or a potassium hydroxide aqueous solution because of high versatility.

A temperature of the alkaline solution in the alkali treatment step is not particularly limited, but is, for example, preferably 5°C or higher and 80°C or lower, and more preferably 10°C or higher and 60°C or lower. An immersion time of the phosphorus oxoacid group-introduced fiber in the alkaline solution in the alkali treatment step is not particularly limited, but is, for example, preferably five minutes or more and 30 minutes or less, and more preferably ten minutes or more and 20 minutes or less. The amount of the alkaline solution used in the alkali treatment is not particularly limited, but is, for example, preferably 100 parts by mass or more and 100,000 parts by mass or less, and more preferably 1,000 parts by mass or more and 10,000 parts by mass or less with respect to 100 parts by mass (absolute dry mass) of the phosphorus oxoacid group-introduced fiber.

The alkali treatment may be a neutralization treatment/ion exchange treatment of a phosphorus oxoacid group. A temperature of the alkaline solution is preferably room temperature.

In order to reduce the amount of the alkaline solution used in the alkali treatment step, the phosphorus oxoacid group-introduced fiber may be washed with water or an organic solvent after the phosphorus oxoacid group introduction step and before the alkali treatment step. After the alkali treatment step and before the defibration treatment step, it is preferable to wash the phosphorus oxoacid group-introduced fiber subjected to the alkali treatment with water or an organic solvent from a viewpoint of improving handleability.

(Acid treatment step)

When the fine fibrous cellulose is produced, the fiber raw material may be subjected to an acid treatment between the phosphorus oxoacid group introduction step and a defibration treatment step described later. For example, the phosphorus oxoacid group introduction step, the acid treatment step, the alkali treatment step, and the defibration treatment step may be performed in this order.

A method for the acid treatment is not particularly limited, but examples thereof include a method for immersing the fiber raw material in an acidic solution containing an acid. A concentration of the acidic solution used is not particularly limited, but is, for example, preferably 10% by mass or less, and more preferably 5% by mass or less. The pH of the acidic solution used is not particularly limited, but is, for example, preferably 0 or more and 4 or less, and more preferably 1 or more and 3 or less. As the acid contained in the acidic solution, for example, an inorganic acid, a sulfonic acid, or a carboxylic acid can be used. Examples of the inorganic acid include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid include methanesulfonic acid, ethanesulfonic acid, benzenesulfonic acid, p-toluenesulfonic acid, and trifluoromethanesulfonic acid. Examples of the carboxylic acid include formic acid, acetic acid, citric acid, gluconic acid, lactic acid, oxalic acid, and tartaric acid. Among these, hydrochloric acid or sulfuric acid is particularly preferably used.

A temperature of the acid solution in the acid treatment is not particularly limited, but is, for example, preferably 5°C or higher and 100°C or lower, and more preferably 20°C or higher and 90°C or lower. An immersion time in the acid solution in the acid treatment is not particularly limited, but for example, preferably five minutes or more and 120 minutes or less, and more preferably ten minutes or more and 60 minutes or less. The amount of the acid solution used in the acid treatment is not particularly limited, but is, for example, preferably 100 parts by mass or more and 100,000 parts by mass or less, and more preferably 1,000 parts by mass or more and 10,000 parts by mass or less with respect to 100 parts by mass (absolute dry mass) of the fiber raw material.

(Defibration treatment step)

The fine fibrous cellulose is obtained by subjecting the phosphorus oxoacid group-introduced fiber to a defibration treatment in a defibration treatment step.

In the defibration treatment step, for example, a defibration treatment device can be used. The defibration treatment device is not particularly limited, but for example, a high-speed defibration machine, a grinder (stone mill pulverizer), a high-pressure homogenizer or an ultra-high pressure homogenizer, a high-pressure collision pulverizer, a ball mill, a bead mill, a disc refiner, a conical refiner, a biaxial kneader, a vibration mill, a homomixer under high-speed rotation, an ultrasonic disperser, a beater, or the like can be used. Among the above defibration treatment devices, it is preferable to use a high-speed defibration machine, a high-pressure homogenizer, and an ultra-high pressure homogenizer which are less affected by grinding media and are less likely to cause contamination.

In the defibration treatment step, for example, the phosphorus oxoacid group-introduced fiber is preferably diluted with a dispersion medium to form a slurry. As the dispersion medium, one or two or more selected from water and organic solvents such as a polar organic solvent can be used. The polar organic solvent is not particularly limited, but for example, alcohols, polyhydric alcohols, ketones, ethers, esters, and aprotic polar solvents are preferable. Examples of the alcohols include methanol, ethanol, isopropanol, n-butanol, and isobutyl alcohol. Examples of the polyhydric alcohols include ethylene glycol, propylene glycol, and glycerin. Examples of the ketones include acetone and methyl ethyl ketone (MEK). Examples of the ethers include diethyl ether, tetrahydrofuran, ethylene glycol monomethyl ether, ethylene glycol monoethyl ether, ethylene glycol mono-n-butyl ether, and propylene glycol monomethyl ether. Examples of the esters include ethyl acetate and butyl acetate. Examples of the aprotic polar solvent include dimethylsulfoxide (DMSO), dimethylformamide (DMF), dimethylacetamide (DMAc), and N-methyl-2-pyrrolidinone (NMP).

A solid content concentration of the fine fibrous cellulose during the defibration treatment can be appropriately set.

The slurry obtained by dispersing the phosphorus oxoacid group-introduced fiber in a dispersion medium may contain a solid content other than the phosphorus oxoacid group-introduced fiber, for example, urea having a hydrogen bonding property.

In one embodiment of the electrolyte membrane for a polymer electrolyte fuel cell, the content of the fine fibrous cellulose in the solid content is preferably 80% by mass or more and 100% by mass or less, more preferably 85% by mass or more, still more preferably 90% by mass or more, and may be 95% by mass or less from a viewpoint of improving proton conductive performance of the electrolyte membrane for a polymer electrolyte fuel cell.

In another embodiment of the electrolyte membrane for a polymer electrolyte fuel cell, the content of the fine fibrous cellulose in the solid content is preferably 10% by mass or more and 80% by mass or less, more preferably 20% by mass or more, still more preferably 30% by mass or more, and more preferably 70% by mass or less, and still more preferably 60% by mass or less.

When the electrolyte membrane for a polymer electrolyte fuel cell of the present embodiment contains a poly(vinylphosphonic acid)-coated cellulose nanocrystal described later, the content of fine fibrous cellulose in the solid content of the electrolyte membrane for a polymer electrolyte fuel cell is preferably within the above range.

In the above-described case, the content of the fine fibrous cellulose in the solid content of the electrolyte membrane for a polymer electrolyte fuel cell is preferably the above lower limit value or more from a viewpoint of improving proton conductive performance of the electrolyte membrane for a polymer electrolyte fuel cell and mechanical strength of the electrolyte membrane for a polymer electrolyte fuel cell, and is preferably the above upper limit value or less from a viewpoint of improving proton conductive performance of the electrolyte membrane for a polymer electrolyte fuel cell.

<Polymer having sulfonic acid group>

The electrolyte membrane for a polymer electrolyte fuel cell of the present embodiment may contain a filler from a viewpoint of mechanical strength and thinning of the electrolyte membrane for a polymer electrolyte fuel cell. Examples of the filler include a polymer having a sulfonic acid group, sulfonated silica nanoparticles, a carbon nanotube, and a metal organic framework (MOF), and a polymer having a sulfonic acid group is preferable. Examples of the polymer having a sulfonic acid group include a perfluorosulfonic acid polymer, sulfonated polyether ether ketone, sulfonated polybenzimidazole, sulfonated polyether ether ketone, polystyrene sulfonic acid, and sulfonated polytrifluorostyrene.

The content of the filler in the electrolyte membrane for a polymer electrolyte fuel cell can be, for example, less than 10% by mass or 5% by mass or less, and is 0% by mass or more.

<Poly(vinylphosphonic acid)-coated cellulose nanocrystal>

The electrolyte membrane for a polymer electrolyte fuel cell of the present embodiment preferably contains a poly(vinylphosphonic acid)-coated cellulose nanocrystal from a viewpoint of improving proton conductive performance of the electrolyte membrane for a polymer electrolyte fuel cell. In the poly(vinylphosphonic acid)-coated cellulose nanocrystal, a part or the whole of a surface of the cellulose nanocrystal is coated with poly(vinylphosphonic acid).

The cellulose nanocrystal can be obtained by subjecting a cellulose fiber to an acid treatment. The cellulose fiber is a cellulose-containing fiber raw material, and the cellulose fiber is not particularly limited, but it is preferable to use a pulp

from a viewpoint of being easily available and inexpensive. Examples of the pulp include a wood pulp, a non-wood pulp, and a deinked pulp. The wood pulp is not particularly limited, but examples thereof include: chemical pulps such as leaf bleached kraft pulp (LBKP), needle bleached kraft pulp (NBKP), sulfite pulp (SP), dissolving pulp (DP), soda pulp (AP), unbleached kraft pulp (UKP), and oxygen-bleached kraft pulp (OKP); semi-chemical pulps such as semi-chemical pulp (SCP) and chemigroundwood pulp (CGP); and mechanical pulps such as ground wood pulp (GP) and thermomechanical pulp (TMP and BCTMP). The non-wood pulp is not particularly limited, but examples thereof include: cottonbased pulps such as cotton linter and cotton lint; and non-wood based pulps such as hemp, wheat straw, bamboo, and bagasse. The deinked pulp is not particularly limited, but examples thereof include a deinked pulp made from waste paper. As the pulp of the present embodiment, one of the above pulps may be used singly, or two or more thereof may be used in combination.

The cellulose nanocrystal may have an ionic functional group from a viewpoint of improving proton conductive performance of the electrolyte membrane for a polymer electrolyte fuel cell, and specific examples of the ionic functional group include a phosphorus oxoacid group.

The cellulose nanocrystal can be produced, for example, with reference to JP 2022-132151 A.

In the poly(vinylphosphonic acid)-coated cellulose nanocrystal, a mass ratio of poly(vinylphosphonic acid) to cellulose nanocrystal (poly(vinylphosphonic acid)/cellulose nanocrystal) is preferably 1/99 or more and 40/60 or less, more preferably 5/95 or more, still more preferably 15/85 or more, and more preferably 30/70 or less, and still more preferably 25/75 or less.

The mass ratio (poly(vinylphosphonic acid)/cellulose nanocrystal) is preferably the above lower limit value or more from a viewpoint of improving proton conductive performance of the electrolyte membrane for a polymer electrolyte fuel cell, and is preferably the above upper limit value or less from a viewpoint of mechanical strength of the electrolyte membrane for a polymer electrolyte fuel cell.

When the electrolyte membrane for a polymer electrolyte fuel cell contains a poly(vinylphosphonic acid)-coated cellulose nanocrystal, the content of the poly(vinylphosphonic acid)-coated cellulose nanocrystal in the solid content of the electrolyte membrane for a polymer electrolyte fuel cell is preferably 10% by mass or more and 80% by mass or less, more preferably 20% by mass or more, and still more preferably 30% by mass or more, and more preferably 75% by mass or less, and still more preferably 70% by mass or less.

The content of the poly(vinylphosphonic acid)-coated cellulose nanocrystal is preferably the above lower limit value or more from a viewpoint of improving proton conductive performance of the electrolyte membrane for a polymer electrolyte fuel cell, and is preferably the above upper limit value or less from a viewpoint of mechanical strength of the electrolyte membrane for a polymer electrolyte fuel cell.

When the electrolyte membrane for a polymer electrolyte fuel cell contains a poly(vinylphosphonic acid)-coated cellulose nanocrystal, a mass ratio of poly(vinylphosphonic acid)-coated cellulose nanocrystal to fine fibrous cellulose (poly(vinylphosphonic acid)-coated cellulose nanocrystal/fine fibrous cellulose) in the electrolyte membrane for a polymer electrolyte fuel cell is preferably 20/80 or more and 80/20 or less, more preferably 30/70 or more, and still more preferably 40/60 or more, and more preferably 70/30 or less, and still more preferably 60/40 or less.

The mass ratio (poly(vinylphosphonic acid)-coated cellulose nanocrystal/fine fibrous cellulose) is preferably the above lower limit value or more from a viewpoint of improving proton conductive performance of the electrolyte membrane for a polymer electrolyte fuel cell, and is preferably the above upper limit value or less from a viewpoint of mechanical strength of the electrolyte membrane for a polymer electrolyte fuel cell.

The poly(vinylphosphonic acid)-coated cellulose nanocrystal can be produced by a conventional method. Specifically, for example, the poly(vinylphosphonic acid)-coated cellulose nanocrystal can be produced with reference to ACS Applied Materials & Interfaces 2022, 14 (6), 8353-8360, Nanoscale Advances 2022, 4 (22), 4714-4723, and Energy Fuels 2022, 36, 13924-13929.

<Water>

In addition, the electrolyte membrane for a polymer electrolyte fuel cell of the present embodiment preferably contains a certain amount or more of water from a viewpoint of improving a proton conductivity, and the content of water in the electrolyte membrane for a polymer electrolyte fuel cell is preferably 3% by mass or more and 20% by mass or less, more preferably 5% by mass or more, and still more preferably 7% by mass or more, and more preferably 16% by mass or less, and still more preferably 12% by mass or less.

<Other components>

The electrolyte membrane for a polymer electrolyte fuel cell of the present embodiment may contain a component other than the fine fibrous cellulose, the polymer having a sulfonic acid group, the poly(vinylphosphonic acid)-coated cellulose nanocrystal, and water as long as the effects of the present invention are not impaired. Examples of such a component include a hydrophilic high molecular weight substance, a hydrophilic low molecular weight substance, a paper

strength enhancer, a thermoplastic resin, a surfactant, an organic ion, a coupling agent, an inorganic layered compound, an inorganic compound, a leveling agent, an antiseptic, an antifoaming agent, organic particles, a lubricant, an antistatic agent, an ultraviolet protecting agent, a dye, a pigment, a stabilizer, a magnetic powder, an orientation accelerator, a plasticizer, a dispersant, a coloring inhibitor, a polymerization inhibitor, a pH adjuster, and a crosslinking agent. The content of the component in the electrolyte can be, for example, 5% by mass or less or 3% by mass or less, and is 0% by mass or more.

<Film thickness>

The film thickness of the electrolyte membrane for a polymer electrolyte fuel cell of the present embodiment can be appropriately determined according to the size of a membrane electrode assembly or a polymer electrolyte fuel cell incorporating the electrolyte membrane for a polymer electrolyte fuel cell. The film thickness of the electrolyte membrane for a polymer electrolyte fuel cell of the present embodiment can be, for example, 10 μm or more and 100 μm or less, and may be 25 μm or more and 75 μm or less.

<Water contact angle>

A water contact angle of the electrolyte membrane for a polymer electrolyte fuel cell of the present embodiment is preferably low, and specifically, preferably 80° or less, more preferably 60° or less, and still more preferably 40° or less, and a lower limit value thereof is not particularly limited, but is preferably 30° or more.

The water contact angle is a value obtained by adding 4 μL of distilled water dropwise to a surface of the electrolyte membrane for a polymer electrolyte fuel cell using a dynamic water contact angle tester (1100DAT manufactured by Fibro), and measuring a water contact angle 30 seconds after the dropwise addition in accordance with JIS R 3257:1999. The measurement is performed on both surfaces of the electrolyte membrane for a polymer electrolyte fuel cell, and when the water contact angles for both surfaces are different from each other, an average thereof is adopted as the water contact angle.

[Electrolyte membrane for solid polymer water electrolysis]

As described above, the electrolyte membrane for a polymer electrolyte fuel cell of the present embodiment and an electrolyte membrane for solid polymer water electrolysis of the present embodiment have the same configuration except for applications.

[Membrane electrode assembly (including electrolyte membrane for polymer electrolyte fuel cell)]

A membrane electrode assembly (MEA) of the present embodiment is formed by bonding a positive electrode catalyst layer, the electrolyte membrane for a polymer electrolyte fuel cell of the present embodiment, and a negative electrode catalyst layer in this order. The membrane electrode assembly of the present embodiment can have a similar configuration to a known membrane electrode assembly that can be used for a polymer electrolyte fuel cell except that the membrane electrode assembly of the present embodiment has the electrolyte membrane for a polymer electrolyte fuel cell of the present embodiment. For the membrane electrode body, for example, JP 2022-190524 is referred to.

The membrane electrode assembly of the present embodiment may have a gas diffusion layer on an outer side of the positive electrode catalyst layer (a surface of the positive electrode catalyst layer opposite to a surface having the electrolyte membrane for a polymer electrolyte fuel cell). The membrane electrode assembly of the present embodiment may have a gas diffusion layer on an outer side of the negative electrode catalyst layer (a surface of the negative electrode catalyst layer opposite to a surface having the electrolyte membrane for a polymer electrolyte fuel cell). The thicknesses of the positive electrode catalyst layer, the negative electrode catalyst layer, and the gas diffusion layer can be appropriately determined according to the size of a polymer electrolyte fuel cell.

[Membrane electrode assembly (including electrolyte membrane for solid polymer water electrolysis)]

Another membrane electrode assembly (MEA) of the present embodiment is formed by bonding a positive electrode catalyst layer, the electrolyte membrane for solid polymer water electrolysis of the present embodiment, and a negative electrode catalyst layer in this order. The membrane electrode assembly of the present embodiment can have a similar configuration to a known membrane electrode assembly that can be used for a solid polymer water electrolysis apparatus except that the membrane electrode assembly of the present embodiment has the electrolyte membrane for solid polymer water electrolysis of the present embodiment. Regarding the membrane electrode body, for example, Electrochemistry, 85 (1), 28-33 (2017), JP 2023-41182 A, and WO 2014/157389 A are referred to.

The membrane electrode assembly of the present embodiment may have a gas diffusion layer on an outer side of the positive electrode catalyst layer (a surface of the positive electrode catalyst layer opposite to a surface having the electrolyte membrane for solid polymer water electrolysis). The membrane electrode assembly of the present embodiment may have a gas diffusion layer on an outer side of the negative electrode catalyst layer (a surface of the negative electrode catalyst layer opposite to a surface having the electrolyte membrane for solid polymer water electrolysis). The thicknesses of the positive electrode catalyst layer, the negative electrode catalyst layer, and the gas diffusion layer can be appropriately determined according to the size of a solid polymer water electrolysis apparatus.

[Polymer electrolyte fuel cell]

The polymer electrolyte fuel cell of the present embodiment can have a similar configuration to that of a known polymer electrolyte fuel cell except that the polymer electrolyte fuel cell of the present embodiment has the membrane electrode assembly of the present embodiment.

[Solid polymer water electrolysis apparatus]

The solid polymer water electrolysis apparatus (solid polymer electrolyte water electrolysis apparatus or hydrogen production apparatus) of the present embodiment can have a similar configuration to a known solid polymer water electrolysis apparatus except that the solid polymer water electrolysis apparatus of the present embodiment has the other membrane electrode assembly of the present embodiment. Regarding the known solid polymer water electrolysis apparatus, for example, Electrochemistry, 85 (1), 28-33 (2017), JP 2023-41182 A, and WO 2014/157389 A are referred to.

[Method for producing electrolyte membrane]

A method for producing an electrolyte membrane of the present embodiment includes the following preparation step and film forming step in this order, an average fiber width of a fine fibrous cellulose derived from wood or plants in the following preparation step is 50 nm or less, and the fine fibrous cellulose derived from wood or plants has a phosphorus oxoacid group.

Preparation step: a step of preparing a dispersion of the fine fibrous cellulose derived from wood or plants
Film forming step: a step of forming a film of a dispersion of the fine fibrous cellulose derived from wood or plants

The preparation step can be performed, for example, in a similar manner to that in the "method for producing a fine fibrous cellulose" described above. When a component other than a fine fibrous cellulose is added to the electrolyte membrane of the present embodiment, for example, a fine fibrous cellulose dispersion containing a desired component can be obtained by mixing a component other than the fine fibrous cellulose with a dispersion containing the fine fibrous cellulose obtained through the method for producing the fine fibrous cellulose.

The film forming step is a conventionally known method.

The method for producing the electrolyte membrane of the present embodiment preferably includes the following ion exchange step between the preparation step and the film forming step from a viewpoint of improving proton conductive performance of an obtained electrolyte membrane, reducing temperature dependence of a proton conductivity, and reducing activation energy of proton conduction.

Ion exchange step: a step of treating a dispersion of the fine fibrous cellulose derived from wood or plants with a cation exchange resin.

The cation exchange resin may be either a strongly acidic ion exchange resin or a weakly acidic ion exchange resin, and is preferably a strongly acidic ion exchange resin.

[Method for producing membrane electrode assembly (including electrolyte membrane for polymer electrolyte fuel cell)]

A method for producing the membrane electrode assembly of the present embodiment includes a step of bonding a positive electrode catalyst layer to one surface of an electrolyte membrane for a polymer electrolyte fuel cell obtained by the method for producing an electrolyte membrane of the present embodiment, and bonding a negative electrode catalyst layer to the other surface of the electrolyte membrane for a polymer electrolyte fuel cell. "Bonding" can be performed by a conventional method. For the method for producing a membrane electrode assembly, for example, JP 2022-190524 is referred to.

[Method for producing membrane electrode assembly (including electrolyte membrane for solid polymer water electrolysis)]

A method for producing the other membrane electrode assembly of the present embodiment includes a step of bonding a positive electrode catalyst layer to one surface of an electrolyte membrane for solid polymer water electrolysis obtained by the method for producing an electrolyte membrane of the present embodiment, and bonding a negative electrode catalyst layer to the other surface of the electrolyte membrane for solid polymer water electrolysis. "Bonding" can be performed by a conventional method. For the method for producing a membrane electrode assembly, for example, Electrochemistry, 85 (1), 28-33 (2017), JP 2023-41182 A, and WO 2014/157389 A are referred to.

[Method for producing polymer electrolyte fuel cell]

A method for producing a polymer electrolyte fuel cell of the present embodiment includes a step of incorporating a membrane electrode assembly obtained by the method for producing a membrane electrode assembly of the present embodiment into a polymer electrolyte fuel cell. For the method for producing a polymer electrolyte fuel cell, for example, JP 2022-190524 is referred to.

[Method for producing solid polymer water electrolysis apparatus]

A method for producing a solid polymer water electrolysis apparatus of the present embodiment includes a step of incorporating a membrane electrode assembly obtained by the method for producing a membrane electrode assembly of the present embodiment into a solid polymer water electrolysis apparatus. The solid polymer water electrolysis apparatus of the present embodiment can be produced, for example, with reference to Electrochemistry, 85 (1), 28-33 (2017) and JP 2023-41182 A.

Examples

The features of the present invention will be described more specifically below with reference to Examples and Comparative Examples. The materials, amounts to be used, ratios, contents of treatment, procedures of treatment, and the like described in the following Examples can be appropriately changed without departing from the gist of the present invention. Therefore, the scope of the present invention should not be interpreted as being limited by the specific examples described below. Operations in Examples and Comparative Examples were performed under conditions of room temperature (20 to 25°C) and normal humidity (40 to 50%RH (relative humidity)) unless otherwise specified.

Example 1

[Preparation step]

(phosphorus oxoacid group introduction step)

As a raw material pulp, a needle bleached kraft pulp (solid content 93% by mass, basis weight 245 g/$m^2$, sheet form, Canadian standard freeness (CSF) measured in accordance with JIS P 8121-2: 2012 after disintegration: 700 mL) manufactured by Oji Paper Co., Ltd. was used. The raw material pulp was subjected to a phosphorous oxo oxidation treatment as follows. First, a mixed aqueous solution of 45 parts by mass of ammonium dihydrogen phosphate, 120 parts by mass of urea, and 150 parts by mass of water was added to 100 parts by mass (absolute dry mass) of the raw material pulp to obtain a chemical solution impregnated pulp. Next, the obtained chemical solution-impregnated pulp was heated in a hot air dryer at 165°C for 250 seconds to obtain a pulp (phosphorylated pulp) in which a phosphorus oxoacid group was introduced into a cellulose in the pulp.

(Washing step)

Next, the obtained phosphorylated pulp was subjected to a washing treatment. The washing treatment was performed by repeating an operation of stirring a pulp dispersion obtained by pouring 10 L of ion exchange water into 100 g (absolute dry mass) of the phosphorylated pulp such that the pulp was uniformly dispersed, and then filtering and dehydrating the pulp dispersion. Washing was terminated when an electric conductivity of the filtrate reached 100 μS/cm or less.

(Neutralization treatment)

Next, the phosphorylated pulp after washing was subjected to a neutralization treatment as follows. First, the washed phosphorylated pulp was diluted with 10 L of ion exchange water, and then a 1 N sodium hydroxide aqueous solution was added little by little thereto while the mixture was stirred to obtain a phosphorylated pulp dispersion having a pH of 12 or more and 13 or less. Next, the phosphorylated pulp dispersion was dehydrated and washed to obtain a neutralized phosphorylated pulp.

The obtained phosphorylated pulp was subjected to infrared absorption spectrum measurement using FT-IR. As a result, absorption based on P=O of a phosphorus oxoacid group was observed in the vicinity of 1230 $cm^{-1}$, and it was confirmed that the phosphorus oxoacid group was added to the pulp. In addition, the obtained phosphorylated pulp was supplied to a test and was analyzed with an X-ray diffraction apparatus. As a result, typical peaks were confirmed at two positions in the vicinity of $2\theta$=14° or more and 17° or less, and in the vicinity of $2\theta$=22° or more and 23° or less, and it was confirmed that the phosphorylated pulp had a cellulose type I crystal structure.

(Defibration treatment step)

Ion exchange water was added to the obtained phosphorylated pulp to prepare a dispersion having a solid content concentration of 2% by mass. This dispersion was treated five times with a wet atomization device (Starburst manufactured by Sugino Machine Co., Ltd.) at a pressure of 200 MPa to obtain a fine fibrous cellulose dispersion (1) containing a fine fibrous cellulose. A counter ion of a phosphorus oxoacid group contained in the fine fibrous cellulose dispersion (1) was $Na^+$.

It was confirmed by X-ray diffraction that the obtained fine fibrous cellulose maintained the cellulose type I crystal structure. A fiber width of the fine fibrous cellulose was measured using a transmission electron microscope and found to be 3 to 5 nm. An average fiber width of the fine fibrous cellulose was 3.5 nm. Note that the amount of phosphoric acid groups (first dissociated acid amount) was 1.45 mmol/g, which was measured by a measurement method described in [Measurement of amount of phosphorus oxoacid groups] described later. Note that the total dissociated acid amount was 2.45 mmol/g.

[Ion exchange step]

Ion exchange water was added to 25 g of the fine fibrous cellulose dispersion (1) having a solid content concentration of 2% by mass to obtain 100 g of a fine fibrous cellulose dispersion (A) having a solid content concentration of 0.5% by mass. A strongly acidic ion exchange resin (conditioned, manufactured by Mitsubishi Chemical Corporation) in an amount of 5 g in terms of volume was added to the obtained fine fibrous cellulose dispersion (A), and the mixture was stirred for two hours. Thereafter, the ion exchange resin and the dispersion were separated by centrifugation to obtain a fine fibrous cellulose dispersion (B).

[Film forming step]

The obtained fine fibrous cellulose dispersion (B) was poured into a Petri dish and then cast-dried at 20°C and 30%RH to obtain an electrolyte membrane. The thickness of the obtained electrolyte membrane was 48 μm. A counter ion of a phosphorus oxoacid group of the fine fibrous cellulose contained in the electrolyte membrane was $H^+$.

Example 2

In a similar manner to Example 1, 100 g of the fine fibrous cellulose dispersion (A) was prepared, and a treatment using a strongly acidic ion exchange resin was not performed. 100 g of the fine fibrous cellulose dispersion (A) was poured into a Petri dish and then cast-dried at 20°C and 30%RH to obtain an electrolyte membrane. The thickness of the obtained electrolyte membrane was 50 μm. A counter ion of a phosphorus oxoacid group of the fine fibrous cellulose contained in the electrolyte membrane was $Na^+$.

Example 3

In [Preparation step] of Example 1, the phosphorylated pulp after (washing) was further subjected to one (phosphorus oxoacid group introduction step) and one (Washing step) in this order. Other procedures were similar to those in Example 1, and an electrolyte membrane having a thickness of 50 μm was obtained. A counter ion of a phosphorus oxoacid group of the fine fibrous cellulose contained in the electrolyte membrane was $H^+$.

Note that the phosphorylated pulp after the neutralization treatment was subjected to infrared absorption

spectrum measurement using FT-IR. As a result, absorption based on P=O of a phosphorus oxoacid group was observed in the vicinity of 1230 $cm^{-1}$, and it was confirmed that the phosphorus oxoacid group was added to the pulp. In addition, the obtained phosphorylated pulp was supplied to a test and was analyzed with an X-ray diffraction apparatus. As a result, typical peaks were confirmed at two positions in the vicinity of $2\theta$=14° or more and 17° or less, and in the vicinity of $2\theta$=22° or more and 23° or less, and it was confirmed that the phosphorylated pulp had a cellulose type I crystal structure.

In addition, a fiber width of the fine fibrous cellulose obtained in (Defibration treatment step) was measured using a transmission electron microscope and found to be 3 to 5 nm. An average fiber width of the fine fibrous cellulose was 3.5 nm. Note that the amount of phosphoric acid groups (first dissociated acid amount) was 1.99 mmol/g, which was measured by a measurement method described in the above-described [Measurement of amount of phosphorus oxoacid groups]. Note that the total dissociated acid amount was 3.29 mmol/g.

Example 4

In [Preparation step] (phosphorus oxoacid group introduction step) of Example 1, the conditions for heating the chemical solution-impregnated pulp were changed such that the pulp was heated in a hot air dryer at 145°C for 200 seconds. Other procedures were similar to those in Example 1, and an electrolyte membrane having a thickness of 50 μm was obtained. A counter ion of a phosphorus oxoacid group of the fine fibrous cellulose contained in the electrolyte membrane was $H^+$.

Note that the phosphorylated pulp after the neutralization treatment was subjected to infrared absorption spectrum measurement using FT-IR. As a result, absorption based on P=O of a phosphorus oxoacid group was observed in the vicinity of 1230 $cm^{-1}$, and it was confirmed that the phosphorus oxoacid group was added to the pulp. In addition, the obtained phosphorylated pulp was supplied to a test and was analyzed with an X-ray diffraction apparatus. As a result, typical peaks were confirmed at two positions in the vicinity of $2\theta$=14° or more and 17° or less, and in the vicinity of $2\theta$=22° or more and 23° or less, and it was confirmed that the phosphorylated pulp had a cellulose type I crystal structure.

In addition, a fiber width of the fine fibrous cellulose obtained in (Defibration treatment step) was measured using a transmission electron microscope and found to be 3 to 5 nm. Note that an average fiber width of the fine fibrous cellulose was 3.9 nm. Note that the amount of phosphoric acid groups (first dissociated acid amount) was 0.87 mmol/g, which was measured by a measurement method described in the above-described [Measurement of amount of phosphorus oxoacid groups]. Note that the total dissociated acid amount was 1.51 mmol/g.

Example 5

[Preparation of poly(vinylphosphonic acid)-coated cellulose nanocrystal water dispersion]

As a RAFT reagent (chain transfer agent), dithiocarbonate O-ethyl-S-(1-ethoxycarbonyl)-ethyl was synthesized according to ACS Applied Materials & Interfaces 2022, 14 (6), 8353-8360. Next, a cellulose nanocrystal coated with poly(vinylphosphonic acid) was prepared according to Nanoscale Advances 2022, 4 (22), 4714-4723 and Energy Fuels 2022, 36, 13924-13929. In the poly(vinylphosphonic acid)-coated cellulose nanocrystal, a mass ratio between a cellulose nanocrystal and a poly(vinylphosphonic acid) (cellulose nanocrystal : poly(vinylphosphonic acid)) is 4 : 1. The obtained poly(vinylphosphonic acid)-coated cellulose nanocrystal was dispersed in ion exchange water to obtain a poly(vinylphosphonic acid)-coated cellulose nanocrystal water dispersion.

[Preparation of cellulose water dispersion]

The poly(vinylphosphonic acid)-coated cellulose nanocrystal water dispersion and the fine fibrous cellulose dispersion (B) obtained in Example 1 were mixed such that a mass ratio between solid contents thereof was 1 : 1 to obtain a mixed solution.

[Film forming step]

The mixed solution was poured into a Petri dish, and then cast-dried at 20°C and 30%RH to prepare a sheet. The obtained sheet was subjected to a pressing treatment at a pressure of 10 MPa for five minutes to obtain an electrolyte membrane. The thickness of the obtained electrolyte membrane was 50 μm. A counter ion of a phosphorus oxoacid group of the fine fibrous cellulose contained in the electrolyte membrane was $H^+$.

Example 6

In [Preparation step] (phosphorus oxoacid group introduction step) of Example 1, 33 parts by mass of

phosphorous acid (phosphonic acid) were used in place of ammonium dihydrogen phosphate. Other procedures were similar to those in Example 1, and an electrolyte membrane having a thickness of 50 μm was obtained. A counter ion of a phosphorus oxoacid group of the fine fibrous cellulose contained in the electrolyte membrane was $H^+$.

Note that the phosphonylated pulp after the neutralization treatment was subjected to infrared absorption spectrum measurement using FT-IR. As a result, absorption based on P=O of a phosphonic acid group which is a tautomer of a phosphorous acid group was observed in the vicinity of 1210 $cm^{-1}$, and it was confirmed that the phosphorous acid group (phosphonic acid group) was added to the pulp. In addition, it was confirmed by X-ray diffraction that the obtained fine fibrous cellulose maintained the cellulose type I crystal structure. In addition, a fiber width of the fine fibrous cellulose obtained in (Defibration treatment step) was measured using a transmission electron microscope and found to be 3 to 5 nm. In addition, an average fiber width of the fine fibrous cellulose was 3.8 nm. Note that the amount of phosphorous acid groups (first dissociated acid amount) was 1.51 mmol/g, which was measured by a measurement method described in [Measurement of amount of phosphorus oxoacid groups] described later, and the total dissociated acid amount was 1.54 mmol/g.

Comparative Example 1

Ion exchange water was added to 10 g of a fine fibrous cellulose dispersion having a solid content concentration of 5.0% by mass (WFo-10005 manufactured by Sugino Machine Co., Ltd., average fiber width: 10 to 50 nm) to obtain 100 g of a fine fibrous cellulose dispersion (C) having a solid content concentration of 0.5% by mass. The obtained fine fibrous cellulose dispersion (C) was poured into a Petri dish and then cast-dried at 20°C and 30%RH to obtain an electrolyte membrane. The thickness of the obtained electrolyte membrane was 60 μm. The fine fibrous cellulose contained in the electrolyte membrane had no ionic functional group.

<Measurement method>

[Measurement of amount of phosphorus oxoacid groups of fine fibrous cellulose]

The amount of phosphorus oxoacid groups of the fine fibrous cellulose was measured by treating a fine fibrous cellulose-containing dispersion prepared by diluting a fine fibrous cellulose dispersion as a target with ion exchange water such that the content of the fine fibrous cellulose was 0.2% by mass with an ion exchange resin, and then performing titration using an alkali.

The treatment with an ion exchange resin was performed by adding a strongly acidic ion exchange resin (Amberjet 1024 manufactured by ORGANO CORPORATION, conditioned) having a volume of 1/10 to the fine fibrous cellulose dispersion, shaking the mixture for one hour, then pouring the resulting mixture onto a mesh having an opening of 90 μm, and separating the ion exchange resin and the dispersion.

The titration using an alkali was performed by measuring a change in a pH value indicated by the dispersion while adding 10 μL of a 0.1 N sodium hydroxide aqueous solution to the fine fibrous cellulose dispersion after the treatment with the ion exchange resin every five seconds.

In this neutralization titration, two points at which an increment (differential value of a pH with respect to the amount of sodium hydroxide added dropwise) is maximum are observed in a curve obtained by plotting a measured pH with respect to the amount of sodium hydroxide added. Out of these points, a maximum point of the increment obtained first after addition of sodium hydroxide is referred to as a first end point, and a maximum point of the increment obtained next is referred to as a second end point (Fig. 1). The amount of sodium hydroxide required from the start of titration to the first end point is equal to the first dissociated acid amount in the dispersion used for titration. In addition, the amount of sodium hydroxide required from the start of titration to the second end point is equal to the total dissociated acid amount in the dispersion used for titration. Note that a value obtained by dividing the amount (mmol) of sodium hydroxide required from the start of titration to the first end point by the solid content (g) in the dispersion to be titrated was defined as the amount of phosphorus oxoacid groups (mmol/g).

<Evaluation method>

[Proton conductivity of electrolyte membrane]

A proton conductivity of the obtained electrolyte membrane at a relative humidity of 95% and a temperature of 20 to 80°C was measured by an alternating current (AC) impedance method using an impedance analyzer (IM3570, HIOKI E.E. CORPORATION, frequency: 4.6 to $4.6 \times 10^6$ Hz, 4-terminal method) in an environment control apparatus (tabletop thermo-hygrostat, SH-222, ESPEC Co., Ltd.). The proton conductivity was measured after the electrolyte membrane was sufficiently left until uptake of moisture in the electrolyte membrane was saturated and the proton conductivity was

stabilized. From a Cole-Cole plot, an inflection point was considered as a bulk resistance of each electrolyte membrane. The proton conductivity σ (S/cm) was calculated using the following formula. As the proton conductivity is larger, battery performance such as power generation efficiency can be made better.

$$\sigma = d/(Rs \times S)$$

d (cm): Distance between gold wires
Rs (Ω): Bulk impedance
S ($cm^2$): proton conduction area calculated by film thickness × width

[Temperature dependence of proton conductivity of electrolyte membrane]

Temperature dependence of a proton conductivity of the electrolyte membrane was calculated by dividing a proton conductivity at 80°C by a proton conductivity at 20°C.

[Activation Energy (Ea) of proton conduction of electrolyte membrane]

Activation energy Ea (eV) of proton conduction was calculated using the following Arrhenius formula. The smaller a value of the activation energy of proton conduction is, the smaller a change in proton conductivity in a temperature change is, and battery performance such as electric energy conversion efficiency or energy density can be improved by a decrease in a change rate of the proton conductivity or a voltage/current density.

$$\sigma \times T = \sigma_0 \exp(-Ea/kT)$$

σ (S/cm): proton conductivity
T (K): absolute temperature
$\sigma_0$: pre-exponential factor
k: Boltzmann constant ($8.6171 \times 10^{-5}$ eV/K)

[Table 1]

| | Ionic functional group of CNF | | Type of counterion | Proton conductivity [S/cm, at 95% RH] | | | | | | | Temperature dependence of proton conductivity | Ea [eV] |
|---|---|---|---|---|---|---|---|---|---|---|---|---|
| | Type | Amount introduced (mmol/g) | | 80°C | 70°C | 60°C | 50°C | 40°C | 30°C | 20°C | | |
| Example 1 | Phosphoric acid group | 1.45 | $H^+$ | $7.9 \times 10^{-2}$ | $7.8 \times 10^{-2}$ | $7.2 \times 10^{-2}$ | $5.7 \times 10^{-2}$ | $4.2 \times 10^{-2}$ | $2.7 \times 10^{-2}$ | $1.6 \times 10^{-2}$ | 4.9 | 0.27 |
| Example 2 | Phosphoric acid group | 1.45 | $Na^+$ | $6.3 \times 10^{-2}$ | $4.9 \times 10^{-2}$ | $3.9 \times 10^{-2}$ | $2.9 \times 10^{-2}$ | $1.7 \times 10^{-2}$ | $9.2 \times 10^{-3}$ | $4.2 \times 10^{-3}$ | 15.0 | 0.42 |
| Example 3 | Phosphoric acid group | 1.99 | $H^+$ | $8.5 \times 10^{-2}$ | $8.4 \times 10^{-2}$ | $8.2 \times 10^{-2}$ | $7.7 \times 10^{-2}$ | $7.0 \times 10^{-2}$ | $6.0 \times 10^{-2}$ | $4.9 \times 10^{-2}$ | 1.7 | 0.11 |
| Example 4 | Phosphoric acid group | 0.87 | $H^+$ | $1.3 \times 10^{-2}$ | $1.2 \times 10^{-2}$ | $1.2 \times 10^{-2}$ | $1.1 \times 10^{-2}$ | $1.1 \times 10^{-2}$ | $9.4 \times 10^{-3}$ | $8.1 \times 10^{-3}$ | 1.6 | 0.09 |
| Example 5 | Phosphoric acid group | 1.45 | $H^+$ | $9.2 \times 10^{-2}$ | $7.7 \times 10^{-2}$ | $6.9 \times 10^{-2}$ | $6.9 \times 10^{-2}$ | $5.9 \times 10^{-2}$ | $4.4 \times 10^{-2}$ | $3.0 \times 10^{-2}$ | 3.1 | 0.18 |
| Comparative Example 1 | Unmodified | - | - | $3.9 \times 10^{-5}$ | $3.0 \times 10^{-5}$ | $2.1 \times 10^{-5}$ | $2.0 \times 10^{-5}$ | $1.0 \times 10^{-5}$ | $5.1 \times 10^{-6}$ | $1.9 \times 10^{-6}$ | 20.5 | 0.46 |
| **CNF: fine fibrous cellulose** | | | | | | | | | | | | |

The electrolyte membrane containing a fine fibrous cellulose derived from wood or plants (having an average fiber width of 50 nm or less and having a phosphorus oxoacid group) defined in the present invention is excellent in proton conductive performance (Examples 1 to 5). Furthermore, an electrolyte membrane containing a fine fibrous cellulose in which a counter ion of a phosphoric acid group is $H^+$ is also excellent in temperature dependence of proton conductivity and activation energy of proton conduction (Examples 1 and 3 to 5).

Note that, although not described in Table 1, the proton conductivity, the temperature dependence of the proton conductivity, and the activation energy of proton conduction in Example 6 were equivalent to the proton conductivity, the temperature dependence of the proton conductivity, and the activation energy of proton conduction in Example 4.

On the other hand, an electrolyte membrane containing a fine fibrous cellulose derived from wood or plants, the cellulose having an average fiber width of 50 nm or less but having no phosphorus oxoacid group, has low proton conductive performance and high temperature dependence of proton conductivity (Comparative Example 1).

## Claims

1. An electrolyte membrane for a polymer electrolyte fuel cell, the membrane comprising a fine fibrous cellulose derived from wood or plants, wherein
an average fiber width of the fine fibrous cellulose derived from wood or plants is 50 nm or less, and the fine fibrous cellulose derived from wood or plants has a phosphorus oxoacid group.

2. The electrolyte membrane for a polymer electrolyte fuel cell according to claim 1, wherein a counter ion of the phosphorus oxoacid group contains $H^+$ and/or $Na^+$.

3. The electrolyte membrane for a polymer electrolyte fuel cell according to claim 1 or 2, wherein a counter ion of the phosphorus oxoacid group contains $H^+$.

4. The electrolyte membrane for a polymer electrolyte fuel cell according to any one of claims 1 to 3, wherein an amount of phosphorus oxoacid groups introduced into the fine fibrous cellulose derived from wood or plants is 0.50 mmol/g or more.

5. The electrolyte membrane for a polymer electrolyte fuel cell according to any one of claims 1 to 4, wherein a content of the fine fibrous cellulose derived from wood or plants is 80% by mass or more in a solid content of the electrolyte membrane for a polymer electrolyte fuel cell.

6. The electrolyte membrane for a polymer electrolyte fuel cell according to any one of claims 1 to 4, wherein a content of the fine fibrous cellulose derived from wood or plants is 30% by mass or more in a solid content of the electrolyte membrane for a polymer electrolyte fuel cell.

7. A membrane electrode assembly comprising a positive electrode catalyst layer, the electrolyte membrane for a polymer electrolyte fuel cell according to any one of claims 1 to 6, and a negative electrode catalyst layer bonded in this order.

8. A polymer electrolyte fuel cell comprising the membrane electrode assembly according to claim 7.

9. A method for producing an electrolyte membrane for a polymer electrolyte fuel cell, the method comprising the following preparation step and film forming step in this order, wherein
an average fiber width of a fine fibrous cellulose derived from wood or plants in the following preparation step is 50 nm or less, and the fine fibrous cellulose derived from wood or plants has a phosphorus oxoacid group:

    Preparation step: a step of preparing a dispersion of the fine fibrous cellulose derived from wood or plants; and
    Film forming step: a step of forming a film of a dispersion of the fine fibrous cellulose derived from wood or plants.

10. The method for producing an electrolyte membrane for a polymer electrolyte fuel cell according to claim 9, the method comprising the following ion exchange step between the preparation step and the film forming step:
Ion exchange step: a step of treating a dispersion of the fine fibrous cellulose derived from wood or plants with a cation exchange resin.

11. A method for producing a membrane electrode assembly, the method comprising a step of bonding a positive

electrode catalyst layer to one surface of an electrolyte membrane for a polymer electrolyte fuel cell obtained by the method for producing an electrolyte membrane for a polymer electrolyte fuel cell according to claim 9 or 10, and bonding a negative electrode catalyst layer to the other surface of the electrolyte membrane for a polymer electrolyte fuel cell.

**12.** A method for producing a polymer electrolyte fuel cell, the method comprising a step of incorporating a membrane electrode assembly obtained by the method for producing a membrane electrode assembly according to claim 11.

**13.** An electrolyte membrane for solid polymer water electrolysis, the membrane comprising a fine fibrous cellulose derived from wood or plants, wherein
an average fiber width of the fine fibrous cellulose derived from wood or plants is 50 nm or less, and the fine fibrous cellulose derived from wood or plants has a phosphorus oxoacid group.

[Fig.1]

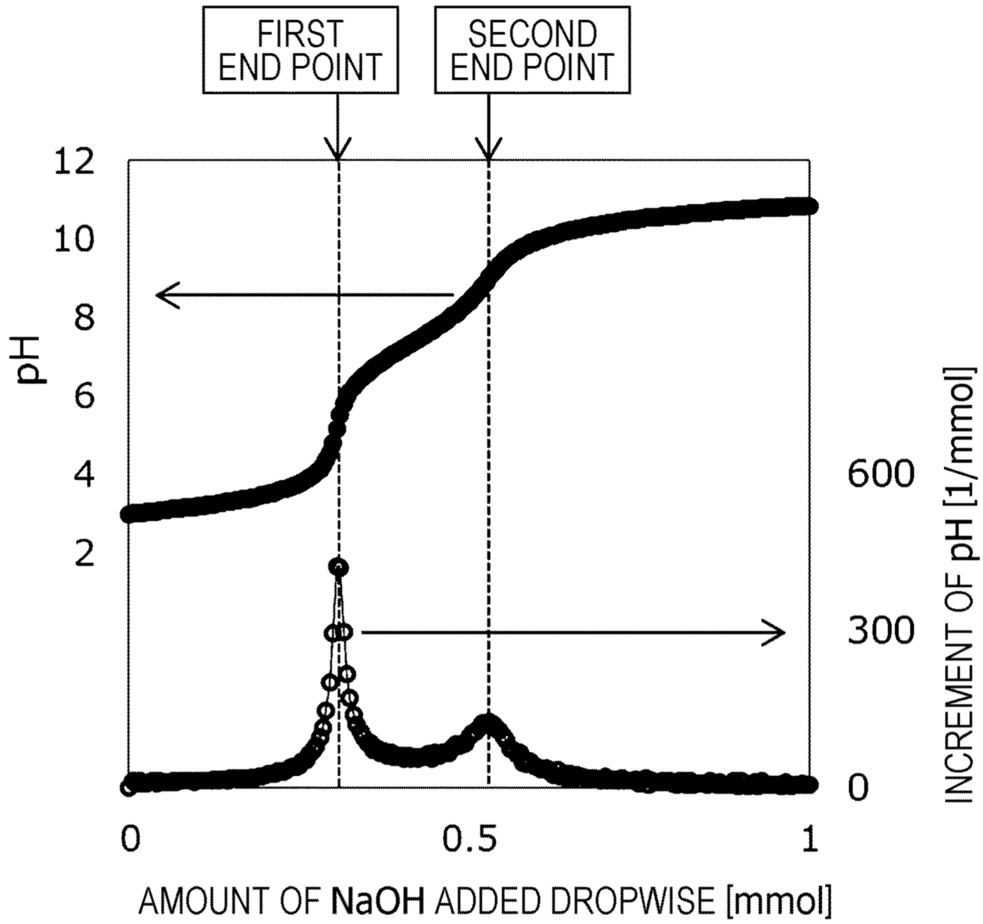
FIRST
END POINT
SECOND
END POINT
12
10
8
6
4
2
pH
600
300
0
INCREMENT OF pH [1/mmol]
0
0.5
1
AMOUNT OF NaOH ADDED DROPWISE [mmol]

**INTERNATIONAL SEARCH REPORT**

International application No. **PCT/JP2024/019090**

**A. CLASSIFICATION OF SUBJECT MATTER**

***H01M 8/1018***(2016.01)i; ***C08B 5/00***(2006.01)i; ***D21H 11/18***(2006.01)i; ***D21H 15/02***(2006.01)i; ***H01M 8/10***(2016.01)i; ***H01M 8/1034***(2016.01)i; ***H01M 8/1067***(2016.01)i; ***H01M 8/1069***(2016.01)i; ***H01M 8/1081***(2016.01)i; ***H01M 8/1086***(2016.01)i

FI: H01M8/1018; H01M8/1067; H01M8/1069; H01M8/1081; H01M8/10 101; H01M8/1086; D21H11/18; D21H15/02; C08B5/00; H01M8/1034

According to International Patent Classification (IPC) or to both national classification and IPC

**B. FIELDS SEARCHED**

Minimum documentation searched (classification system followed by classification symbols)

H01M8/1018; C08B5/00; D21H11/18; D21H15/02; H01M8/10; H01M8/1034; H01M8/1067; H01M8/1069; H01M8/1081; H01M8/1086

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-022044 A (KYUSHU UNIVERSITY) 26 January 2017 (2017-01-26) paragraphs [0006]-[0008], [0021], [0034], [0047]-[0050], [0053], fig. 16, 17 | 1-13 |
| A | JP 57-128468 A (MITSUBISHI RAYON CO., LTD.) 10 August 1982 (1982-08-10) | 1-13 |
| A | KR 10-2018-0107544 A (KOREA RESEARCH INSTITUTE OF CHEMICAL TECHNOLOGY) 02 October 2018 (2018-10-02) | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 August 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/019090**

| Patent document cited in search report | Publication date (day/month/year) | Patent family member(s) | Publication date (day/month/year) |
|---|---|---|---|
| JP 2017-022044 A | 26 January 2017 | JP 6721952 B2 | |
| JP 57-128468 A | 10 August 1982 | (Family: none) | |
| KR 10-2018-0107544 A | 02 October 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6721952 B
- WO 2014157389 A
- JP 2022132151 A
- JP 2022190524 A
- JP 2023041182 A


### Non-patent literature cited in the description


- **SEAGAL et al.** *Textile Research Journal*, 1959, vol. 29, 786
- *ACS Applied Materials & Interfaces*, 2022, vol. 14 (6), 8353-8360
- *Nanoscale Advances*, 2022, vol. 4 (22), 4714-4723
- *Energy Fuels*, 2022, vol. 36, 13924-13929
- *Electrochemistry*, 2017, vol. 85 (1), 28-33